(19) Europäisches Patentamt
European Patent Office
Office européen des brevets

(11) Publication number: **0 313 838 A2**

(12) **EUROPEAN PATENT APPLICATION**

(21) Application number: 88115887.7

(51) Int. Cl.4: C08G 61/08

(22) Date of filing: 27.09.88

(30) Priority: 01.10.87 US 103270

(43) Date of publication of application: 03.05.89 Bulletin 89/18

(84) Designated Contracting States: BE DE FR GB IT NL SE

(71) Applicant: THE B.F. GOODRICH COMPANY
3925 Embassy Parkway
Akron Ohio 44313-1799(US)

(72) Inventor: Tenney, Linwood P.
890 Division Street
Hudson Ohio 44236(US)
Inventor: Lane, Parley C.
3040 Kilarney Street
Cuyahoga Falls Ohio 44221(US)
Inventor: Stricharczuk, Paul T.
6511 Maisol Road Apt. 414
Mayfield Heights Ohio 44124(US)

(74) Representative: von Kreisler, Alek, Dipl.-Chem. et al
Patentanwälte Von Kreisler-Selting-Werner
Deichmannhaus am Hauptbahnhof
D-5000 Köln 1(DE)

(54) **Cycloolefin polymers obtained from resinous monomers.**

(57) The compositions provided by this invention comprise ring-opened polymerized polymers obtained from cycloolefin monomers wherein a portion of said monomer is comprised of high molecular weight, resinous cycloolefin monomers. These resinous cycloolefin monomers provide high heat distortion temperatures without significantly affecting processability when polymerized in a solvent. When ring-opened polymerized cycloolefin monomers and resinous cycloolefin monomers are polymerized in bulk, in a mold, there is no need for processability and molecular weight control. These resinous cycloolefin monomers are obtained by Diels-Alder reaction of cyclopentadiene with cycloolefin monomers and/or olefins. Significant improvements (increases) in glass transition are seen, which correlates with higher heat distortion temperatures. The polymers obtained exhibit glass transition temperatures suitable for automotive and other engineering plastic applications.

EP 0 313 838 A2

# CYCLOOLEFIN POLYMERS OBTAINED FROM RESINOUS MONOMERS

## FIELD OF THE INVENTION

This invention is directed to polymers of cycloolefin monomers obtained by ring-opening polymerization. More particularly, this invention is directed to polymers obtained from ring-opened polymerized substituted and unsubstituted cycloolefin monomers, a portion of which comprise resinous cycloolefin monomers, which are themselves oligomers and polymers obtained from Diels-Alder addition polymerization. These resinous cycloolefin monomers are also referred to as polycyclic olefin monomers.

## BACKGROUND OF THE INVENTION

Polymers obtained by a ring-opening polymerization of cycloolefins that contain the norbornene moiety are well known. For example, U.S. Patent Nos. 4,136,249; 4,178,424; 4,136,247 and 4,136,248, assigned to the same assignee as the present invention, describe such polymers and each is incorporated herein by reference for the description of polymers therein.

Ring-opening polymerization of cycloolefins yields unsaturated linear polymers which are of particular interest in that they are known to be reactive (sulfur-vulcanizable) and with difunctional monomers, branching and crosslinking can occur. They are known to exhibit attractive property profiles for many polymer applications, such as, for example, as automotive parts, particularly decorative trim.

Dicyclopentadiene, for example, is a common cycloolefin monomer used to prepare ring-opened polymerized polymers in that this cycloolefin monomer is readily available as a by-product in ethylene production. Recent U.S. patents directed to polymers from dicyclopentadiene include U.S. Patents Nos. 3,778,420; 3,781,257; 3,790,545; 3,853,830; 4,002,815 and 4,239,874. Other well known cycloolefin monomers include bicyclic norbornene (bicyclo[2.2.1]-hept-2-ene) and substituted bicyclic norbornenes, which are produced by Diels-Alder reaction of cyclopentadiene with selected olefins. U.S. Patent No. 3,074,918 describes the polymerization of cycloolefin monomers including bicyclic norbornene and substituted bicyclic norbornenes, as do other U.S. patents such as U.S. Patent Nos. 3,546,183; 2,721,189; 2,831,037; 2,932,630; 3,330,815; 3,367,924; 3,467,633; 3,836,593; 3,879,343 and 4,020,021. The above patents are incorporated herein by reference for their disclosure of polymers obtained from ring-opening polymerization of bicyclic norbornenes and substituted bicyclic norbornenes.

Tetracyclododecene and substituted tetracyclododecenes are also well known cycloolefins. These are made by Diels-Alder reaction of cyclopentadiene with bicyclic norbornene or the appropriate substituted bicyclic norbornene. Ring-opening polymerization of tetracyclododecene with other bicyclic olefin comonomers (bicycloheptene and substituted bicycloheptene) has been disclosed in U.S. Patent No. 3,557,072, incorporated herein by reference for the polymerizations disclosed therein.

Ring-opened polymerized polymers from dicyclopentadiene and tetracyclododecene are known to have excellent glass transition temperatures; however, these solution-made polymers are difficult to process into finished articles when the dicyclopentadiene content is high. There is a continuing effort to both enhance glass transition temperatures and simplify processing of the solution ring-opened polymerized polymers. For example, U.S. Patent No. 4,178,424 is directed to such goals.

In contrast, for polymers and copolymers prepared in bulk, processing, in terms of melt flow, is not a problem since the polymerization takes place in a mold and in the shape desired and melt processing is not required. Minchak, U.S. Pat. No. 4,426,502, discloses a bulk polymerization process for "norbornene type monomers" which include norbornene, dicyclopentadiene, tricyclopentadiene (cyclopentadiene trimer) and tetracyclododecene. However, although processing is not a problem for bulk polymerized polymers, there is a desire to enhance the glass transition temperatures of the polymers obtained.

Alternative polymers with enhanced glass transition temperature values are desired in pursuing new applications for ring-opened polymerized polymers.

## SUMMARY OF THE INVENTION

This invention provides a composition substantially comprised of a ring-opened polymerized polymer derived from cycloolefin monomers of which about 5 weight percent, based on the total weight of

cycloolefin monomers, comprises one or more resinous cycloolefin monomers having a chemical structure which conforms to Formula I or Formula II as defined below. When these resinous cycloolefin monomers are used with other cycloolefin monomers, such as bicyclic norbornene, tetracyclododecene and dicyclopentadiene, higher glass transition temperatures are obtained then when using combinations of these cycloolefin monomers alone. Copolymers which exhibit high glass transition temperatures are easily provided in that small quantities of the resinous cycloolefin monomer are effective in enhancing glass transition temperature values. Homopolymers of resinous cycloolefin monomers are also provided by this invention.

## DETAILED DESCRIPTION OF THE PREFERRED EMBODIMENT

The compositions provided by the present invention comprise a ring-opened polymerized polymer derived from cycloolefin monomers, a portion of which comprises one or more resinous cycloolefin monomers conforming to a formula selected from the group consisting of formulas I and II.

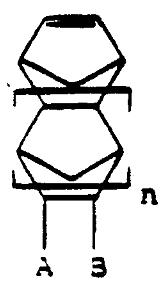 I

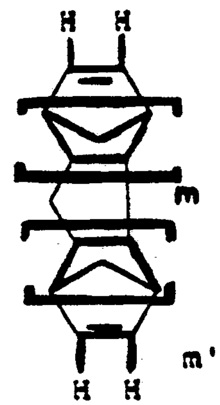 II

For Formula I, "n" is a whole number of from 1 to 10 having an average value greater than 1 for all resinous monomers of Formula I in said ring-opened polymerized polymer and both m and $m'$ of Formula II are independently whole numbers of from 1 to 9 subject to the proviso that the sum of $m+m'$ is less than 10 for each cycloolefin monomer and the average value of $m + m'$ for all resinous cycloolefin monomers of Formula II in said ring-opened polymerized polymer is greater than 2. Where "n" is 2 or more, A and B of Formula I are independently selected from hydrogen, halogen, alkyl groups of from 1 to 12 carbon atoms, alkylene groups of from 2 to 12 carbon atoms, substituted and unsubstituted aryl groups of from 6 to 20 carbon atoms, cycloalkyl and substituted cycloalkyl groups of from 6 to 12 carbon atoms or A and B form saturated and unsaturated cyclic groups of from 4 to 12 carbon atoms with the two ring carbon atoms connected thereto. The two ring carbon atoms contribute to and form part of the 4 to 12 carbon atoms within the cyclic group. Where "n" is equal to 1, A and B form saturated and unsaturated cyclic groups of from 4 to 12 carbon atoms with the two ring carbon atoms connected thereto.

Of the halogens within the scope of A and B, chlorine and bromine are preferred. For the alkyl groups of A and B, branched and straight chained alkyl groups of 1 to 4 carbon atoms are preferred. For the alkylene groups, those having 2 to 3 carbon atoms are preferred and for the substituted and unsubstituted aryl groups within the scope of A and B, those radicals provided by the Diels-Alder reaction of the vinyl moiety of styrene or substituted styrenes with the cyclopentadiene structure are preferred. Of the cycloalkyl and substituted cycloalkyl groups, those having unsaturated carbon atoms are preferred, particularly cyclohexene.

Where A and B together form saturated and unsaturated cyclic groups with the 2 ring carbon atoms connected thereto, A and B preferably form a cyclopentene group with 2 unsaturated carbon atoms. Such a structure is obtained by the Diels-Alder dimerization, trimerization, etc. of cyclopentadiene.

The resinous cycloolefin monomers are distinct cycloolefin monomers in that they are high in molecular weight and may exhibit resinous characteristics when isolated. Those which are most preferred conform to Formula I and, in addition, conform to one of Formulas III through V represented below:

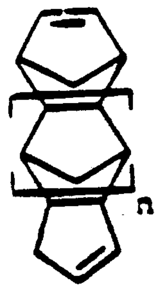
III
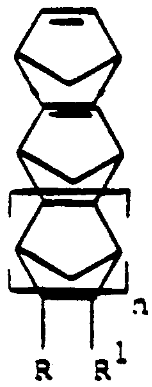
IV
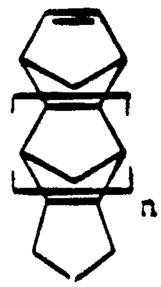
V

wherein n is a whole number of from 1 to 10 and has an average value in the range greater than 1 to below about 6 for the resinous cycloolefin monomers of Formulas III, IV and V and R and $R^1$ are independently selected from hydrogen, $C_1$-$C_4$ alkyl groups and $C_2$-$C_4$ alkylene groups. It is desirable to maintain the degree of polymerization for the resinous cycloolefin monomers below 10 because solubility problems may occur when synthesizing the polymer.

Whole numbers n, m and $m'$ for Formulas I and II define the degree of polymerization of the resinous cycloolefin monomers used in the present invention. Although these values may range from 1 to 10, the average value of n is above 1 and the average value of $m + m'$ is above 2 so as to provide higher molecular weight polymers than when using the cyclopentadiene trimers alone.

To achieve a value greater than 1 for n and greater than 2 for $m + m'$, a portion of the resinous monomers must be polymerized beyond a cyclopentadiene trimer. The cyclopentadiene trimer may form a significant portion of the resinous monomers utilized. The cyclopentadiene trimer conforms to Formula I where A and B form an unsaturated cyclopentadiene ring and n=1. The cyclopentadiene trimer also conforms to Formula II where both m and $m'$ ($m + m' = 2$). To achieve a higher molecular weight polymer, these trimers may be used in combination with cyclopentadiene tetramers, pentamers, etc. with higher values of n and $m + m'$. Most preferably, the average value of n falls within the range of values greater than 1 to about 2 and the average value for $m + m'$ falls within the range of about 2 to 3 for all resinous cycloolefin monomers in the copolymer. Resinous monomers with such a degree of polymerization will provide an increase in heat distortion temperature for the final polymer and do not exhibit substantial solubility problems within the polymerization medium.

The quantity of resinous cycloolefin monomer incorporated within the ring-opened polymerized polymers is at least about 5 weight percent, based on the total weight of cycloolefin monomers within said polymer. Quantities in excess of 5 weight percent are desired to provide a noticeable enhancement in glass transition temperature. Hompolymers of these resinous cycloolefin monomers are included, particularly those of Formula I where n is from 2 to 5 and therefore, the quantity of resinous cycloolefin monomer utilized to form the polymer can be as high as 100% by weight of the total cycloolefin monomer. Quantities in excess of 50 weight percent of the total cycloolefin monomer can provide polymers that may be difficult to process if obtained by solution polymerization due to crosslinking. For bulk polymerization by reaction injection molding, the polymerization takes place in the mold in the shape of the desired product, therefore crosslinking presents no problems when it occurs.

Preferred quantities of resinous cycloolefin monomer within the copolymers obtained fall within the range of about 5 to 45 percent by weight of the total monomer and most preferably, about 15 to 30 percent by weight of the total cycloolefin monomer present within the copolymer produced. Such quantities provide the desired increase in heat distortion temperature to common cycloolefin monomers, such as dicyclopentadiene.

The resinous cycloolefin monomers can be obtained by the pre-polymerization of cyclopentadiene by Diels-Alder reaction. Such a reaction can proceed without catalyst and is accelerated by the application of heat. Heating a volume of dicyclopentadiene will also provide pre-polymerization and result in resinous cycloolefin monomers. An example of such resin formation is shown in Table I.

TABLE 1

| Composition after Pre-polymerization of 99.8% pure Dicyclopentadiene | | | | |
|---|---|---|---|---|
| Initial Composition | Compositions after prepolymerization (wt %) | | | |
| DCPD[a] | DCPD[a] | tri-CPD[b] | tetra-CPD[b] | penta-CPD[b] |
| 99.8% | 72 | 18 | 4.0 | - |

a DCPD = dicyclopentadiene
b tri-CPD, tetra-CPD, penta-CPD = cyclopentadiene trimer, tetramer, and pentamer, respectively

It is noted a mixture of resinous cycloolefin monomers is obtained. The pre-polymerization can be controlled so as to provide cycloolefin monomers with a degree of polymerization beyond the cyclopentadiene trimer (n = 1). Generally, the higher the temperature used and the longer the heating period, the higher the degree of polymerization. Such pre-polymerization of cyclopentadiene and dicyclopentadiene yields structures having Formulas II and III above. The structures of Formula II comprise at least 3 cyclopentadiene groups and chain growth may continue at either end of this structure or at both ends simultaneously. For structures of Formula III obtained from cyclopentadiene, chain growth occurs at the norbornene moiety within the molecule. The formation of structures which conform to Formula III takes place more readily than the formation of structures which conform to Formula II and the preponderant product conforms to Formula III.

It is the cyclopentadiene structure which permits the reaction with selected olefins to provide the remaining resinous cycloolefin monomers which conform to Formula I. These selected olefins react by a Diels-Alder reaction to form the additional ring structure. The identity of some of the radicals within the scope of A and B are determined by the olefins selected to react with the cyclopentadiene ring. For example, where the olefin is ethylene, A and B are both hydrogen and where the olefin is styrene, A is hydrogen and B is phenyl. Other common olefins are butene, propylene, butadiene, pentene-1, vinyl cyclohexene and isopentene. These olefins may be reacted with the cyclopentadiene either before, after or during the pre-polymerization. It is preferable that the olefin be liquid so as to react with the cyclopentadiene structure during pre-polymerization. This can be accomplished by adding the olefin to a mixture of dicyclopentadiene and cyclopentadiene and heating said mixture. An example of pre-polymerization of cyclopentadiene and dicyclopentadiene mixtures with an olefin is shown in Table II. The olefin used in the samples reported in Table II is styrene. The initial composition did not contain any cyclopentadiene. Disassociation of a portion of the dicyclopentadiene upon heating provides cyclopentadiene.

## TABLE 2

**Composition after Pre-polymerization of Styrene with Dicyclopentadiene/Cyclopentadiene mixture**

| Initial Compositions (Wt %) | | Compositions after heating (wt %) | | | | |
|---|---|---|---|---|---|---|
| DCPD[a] | styrene | DCPD[a] | tri-CPD[b] | tetra-CPD[b] | styryl-TD[c] | styryl-HH[d] |
| 95 | 5 | 76 | 15.9 | 1.2 | 5.6 | 1.0 |
| 85 | 15 | 74 | 6.0 | 0.2 | 14.0 | 0.7 |

a DCPD = dicyclopentadiene
b tri-CPD, = cyclopentadiene trimer,
tetra-CPD = cyclopentadiene tetramer
c styryl-TD = phenyl tetracyclododecene
d styryl-HH = phenyl hexacycloheptadecene

c = 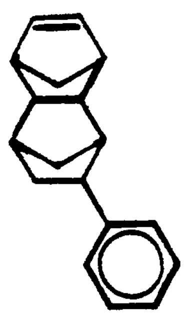

d = 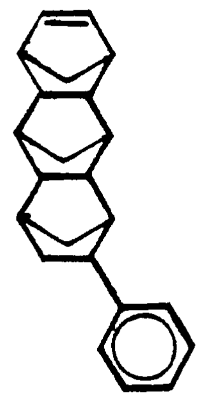

As with the pre-polymerization illustrated in Table 1, the predominant product is cyclopentadiene trimer when styrene content is low. However, portions of the reaction mixture (styryl-TD, styryl-HH) were obtained by reaction with styrene and increase substantially when styrene content is raised. It is noted styryl-TD (phenyl tetracyclododecene) is not a resinous monomer as defined herein.

The cycloolefin monomers copolymerized with the resinous cycloolefin monomers are preferably bicyclic monomers and tetracyclic monomers which conform to Formulas VI and VII below.

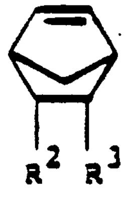

VI

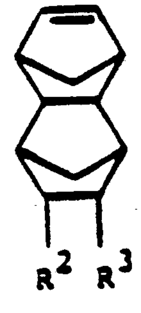

VII

wherein $R^2$ and $R^3$ are independently selected from hydrogen, halogen, $C_1$-$C_{12}$ alkyl groups, $C_2$-$C_{12}$ alkylene groups, including $C_2$-$C_{12}$ alkylidenyl groups, $C_6$-$C_{20}$ cycloalkyl groups, $C_6$-$C_{20}$ cycloalkylene groups and $C_6$-$C_{20}$ aryl groups or $R^2$ and $R^3$ together form saturated or unsaturated cyclic groups of from 4 to 12 carbon atoms with the two ring carbon atoms connected thereto. The two ring carbon atoms

contribute to and form part of the 4 to 12 carbon atoms of the cyclic groups. Therefore, $R^2$ and $R^3$ together need only contribute 2 carbon atoms to form a cyclobutene structure. More common cycloolefin monomers conforming to Formulas VI and VII include
2-norbornene,
5-methyl-2-norbornene,
5,6-dimethyl-2-norbornene,
5-ethyl-2-norbornene,
5-ethylidenyl-2-norbornene,
5-butyl-2-norbornene,
5-hexyl-2-norbornene,
5-octyl-2-norbornene,
5-dodecyl-2-norbornene,
5-isobutyl-2-norbornene,
5-octadecyl-2-norbornene,
5-isopropyl-2-norbornene,
5-phenyl-2-norbornene,
5-p-toluyl-2-norbornene,
5-α-naphthyl-2-norbornene,
5-cyclohexyl-2-norbornene,
5,5-dimethyl-2-norbornene,
dicyclopentadiene (or cyclopentadiene dimer),
dihydrodicyclopentadiene (or cyclopentene-cyclopentadiene co-dimer),
methyl - cyclopentadiene dimer,
ethyl - cyclopentadiene dimer,
tetracyclododecene
9-methyl-tetracyclo[6,2,1,$1^{3,6}$,$0^{2,7}$]dodecene-4,
(or methyl-tetracyclododecene)
9-ethyl-tetracyclo[6,2,1,$1^{3,6}$,$0^{2,7}$]dodecene-4,
(or ethyl-tetracyclododecene)
9-propyl-tetracyclo[6,2,1,$1^{3,6}$,$0^{2,7}$]dodecene-4,
9-hexyl-tetracyclo[6,2,1,$1^{3,6}$,$0^{2,7}$]dodecene-4,
9-decyl-tetracyclo[6,2,1,$1^{3,6}$,$0^{2,7}$]dodecene-4,
9,10-dimethyl-tetracyclo[6,2,1,$1^{3,6}$,$0^{2,7}$]dodecene-4,
9-methyl,10-ethyl-tetracyclo[6,2,1,$1^{3,6}$,$0^{2,7}$]dodecene-4,
9-cyclohexyl-tetracyclo[6,2,1,$1^{3,6}$,$0^{2,7}$]dodecene-4,
9-chloro-tetracyclo[6,2,1,$1^{3,6}$,$0^{2,7}$]dodecene-4,
9-bromo-tetracyclo[6,2,1,$1^{3,6}$,$0^{2,7}$]dodecene-4,
9-fluoro-tetracyclo[6,2,1,$1^{3,6}$,$0^{2,7}$]dodecene-4,
9-isobutyl-tetracyclo[6,2,1,$1^{3,6}$,$0^{2,7}$]dodecene-4,
9,10-dichloro-tetracyclo[6,2,1,$1^{3,6}$,$0^{2,7}$]dodecene-4,

The most preferred norbornene-type monomers of Formulas VI and VII include dicyclopentadiene, 5-methyl-2- norbornene, 5-ethylidene-2-norbornene, 5-phenyl-2-norbornene, 9-methyl-tetracyclo-[6,2,1,$1^{3,6}$,$0^{2,7}$]dodecene-4, (or methyl-tetracyclododecene) and the phenyl and ethylidenyl substituted tetracyclododecenes, and hexacycloheptadecenes.

Mixtures of cycloolefin monomers, both resinous and non-resinous, may be used when desired. The ratio of cycloolefin monomer incorporated into the copolymer approximates the ratio of the cycloolefin monomers in the reaction mixture. Therefore, the ratio of 2 to 1 tetracyclododecene to 5-methyl-2-norbornene provides a polymer having monomer units of a similar ratio.

Non-conjugated acylic olefins, monocyclic olefins and the monocyclic diolefins may also be copolymerized with the resinous cycloolefin monomers used herein. Of the non-conjugated acyclic olefins, those having at least one terminal double bonded carbon atom and containing 2 to 12 carbon atoms are suitable. These are 1-olefins or alpha olefins. Preferably, these non-conjugated acyclic olefins contain 2 to 8 carbon atoms. It is known that these non-conjugated acyclic olefins act as molecular weight modifiers or reducers for solution polymers. This chain termination reaction can aid in the processability of the copolymers they become a part of. By easily processable, it is meant millable and otherwise readily thermoplastic upon appropriate heating. Examples of suitable non-conjugated acyclic monoolefins include 1-butene and hexene-1, 3-methyl-1-butene, 4-methyl-2-pentene, 5-ethyl-3-octene, 2-pentene and the like. The 1-olefins are preferred. Of the non-conjugated diolefins, 1,6-hexadiene is preferred and of the triolefins,

1,4,7-octatriene is preferred. Preferred non-conjugated acyclic monoolefins include 1-butene and 1-hexene. The non-conjugated acyclic monoolefins are typically used in a molar ratio of acyclic olefin to cyclic olefin of from about 0.0001:1 to about 0.5:1 and preferably from about 0.01:1 to 0.3:1.

For polymeric, copolymeric, terpolymeric, and quadpolymeric products made in solution, the incorporation of acyclic olefin monomer is usually required since the reaction products normally require additional processing steps such as milling, extrusion, and the like. The acyclic olefin monomer is used to adjust the polymerization product to a processable molecular weight.

For bulk polymerization processes such as RIM (reaction injection molding), RTM (reagent transfer molding) and LIM (liquid injection molding) and the like, the incorporation of an acyclic olefin is not required and can even be undesirable because the acyclic olefin is normally not incorporated in the product entirely and adversely affects the properties of the polymerized product by acting as a plasticizer or undesirably migrates to the surface of the product (leaches). These unincorporated acyclic olefins also lower the glass transition temperature of the polymer produced, thus lowering the heat distortion temperature.

Of the monocyclic monoolefins, those which contain 4 to 8 carbon atoms are suitable. Examples include cyclobutene, cyclopentene, cycloheptene, cyclooctene, cyclododecene, cyclodecene, and the like. Of the monocyclic diolefins, cyclopentadiene, cyclododecadiene and 1,5-cyclooctadiene are suitable. It is preferable to limit these monocyclic olefins to about 20% by weight of the total cycloolefin monomer used to provide the ring-opening polymerized copolymers. The use of such monocycloolefins reduces the glass transition temperature of the copolymers obtained where a majority of the cycloolefin monomers within the copolymer are bicyclic monomers and higher.

Although the exact nature of the copolymeric structure of the polymers obtained is not fully understood, it is believed to be a linear unsaturated copolymer that is polymerized through the norbornene moiety to provide a 1,3 cyclopentane vinylene repeat structure as represented in Formula VIII below wherein the $C^4$ and $C^5$ carbon atoms are linked to the remaining substituents of the cycloolefin monomers used, represented as A′ and B′. If A′ and B′ form a cyclic olefin, such as with dicyclopentadiene, then branching or crosslinking may occur. Other types of pendant unsaturation may lead to branching and crosslinking.

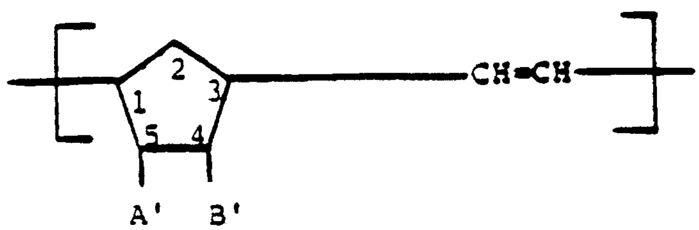

VIII

The copolymers of this invention may be prepared either by a solution method or bulk polymerization method. A preferred catalyst for preparation of the copolymers by a solution method comprises (1) a molybdenum or tungsten salt and (2) a dialkylaluminum halide such as dialkylaluminum iodide, an alkylaluminum dihalide or alkylalkoxy halide or a mixture of trialkylaluminum compound with an iodine source.

Examples of useful molybdenum and tungsten salts include the halides such as chlorides, bromides, iodides, and fluorides. Specific examples of such halides include molybdenum pentachloride, molybdenum hexachloride, molybdenum pentabromide, molybdenum hexabromide, molybdenum pentaiodide, molybdenum hexafluoride, tungsten hexachloride, tungsten hexafluoride and the like. Other representative salts include those of acetylacetonates, sulfates, phosphates, nitrates, and the like. Mixtures of salts can also be used. The more preferred salts are the molybdenum halides, especially molybdenum pentahalides. Excellent results were obtained using $MoCl_5$.

The preferred alkylaluminum compounds used in combination with the molybdenum or tungsten salts may be dialkylaluminum iodides, alkylaluminum diiodides, or a mixture of a trialkylaluminum compound with an iodide source. Each alkyl group may contain from 2 to about 12 carbon atoms, preferably from 2 to about 4 carbon atoms. Specific examples of such compounds include diethylaluminum iodide, ethylaluminum diiodide, propylaluminum diiodide and ethylpropylaluminum iodide. A mixture of a trialkyaluminum compound and an iodide source such as elemental iodine may also be used wherein each alkyl group is as defined above, e.g., a mixture of triethylaluminum and elemental iodine. Other iodine sources include methylene diiodide, potassium iodide, titanium tetraiodide, and the like. Excellent results were obtained using diethylaluminum iodide.

The molybdenum or tungsten salt is generally employed at a level from about 0.01 to about 50

millimoles per mole of total monomer, preferably from about 0.5 to about 10 millimoles per mole of total monomer. The organoaluminum compounds described above are generally used in a molar ratio of organoaluminum compound to molybdenum and/or tungsten salt(s) from about 10/1 to about 1/3, preferably from about 5/1 to about 3/1. Elemental iodine, hen used, typically is used in a range from about 0.1 mole to about 10 moles of iodine per mole of organoaluminum compound. When other sources of iodine are employed, sufficient iodine source is incorporated to provide the above concentration of elemental iodine in the catalyst.

In a preferred embodiment, the molybdenum or tungsten salt is dissolved in a solvent prior to incorporation into the polymerization mixture. In the absence of a solvent for the molybdenum or tungsten salt, the polymerization proceeds with some difficulty due to the presence of insoluble portions of salt. A preferred solvent for the molybdenum or tungsten salt comprises at least one alkyl ester of a saturated carboxylic or dicarboxylic acid. Use of an ester solvent has been found to produce a brief induction period of about 1 to about 5 minutes after addition of the molybdenum or tungsten salt to the monomer mixture. Such an induction period allows addition of all components of the reaction mixture before substantial polymerization begins. The result is more uniform process control and, ultimately, substantially gel-free polymers which are more readily recovered from the reaction vessel and are more easily processable than gelled polymers.

Suitable alkyl esters of saturated carboxylic or dicarboxylic acids typically contain from 2 to 5 carbon atoms and 0 or 1 bromine or chlorine atoms, exemplified by methyl formate, ethyl formate, methyl chloroformate, ethyl chloroformate, butyl chloroformate, methyl acetate, ethyl acetate, isopropyl acetate, n-propyl acetate, methyl bromoacetate, ethyl bromoacetate, ethyl chloroacetate, methyl propionate, ethyl propionate, ethyl 2-bromopropionate, ethyl 3-bromopropionate, methyl 2-chloropropionate, dimethylmalonate, and the like. Excellent results were obtained using ethyl acetate.

The above ester solvents may be used together with at least one inert cosolvent. The cosolvent typically constitutes from 0% to about 90% by weight of the total catalyst solvent weight. Additional cosolvent may also be used during polymerization. The additional cosolvent is typically up to about 500 times and more, preferably up to about 150 times, the total catalyst solvent weight. Suitable inert cosolvents include aliphatic or cycloaliphatic hydrocarbon cosolvents containing about 4 to 10 carbon atoms such as pentane, hexane, heptane, octane, cyclohexane, cyclooctane and the like; aromatic hydrocarbon cosolvents containing about 5 to 14 carbon atoms and which are liquid or easily liquified such as benzene, toluene, naphthalene and the like; and substituted hydrocarbons wherein the substituents are inert, such as dichloromethane, chloroform, chlorobenzene and the like. Benzene and toluene are excellent cosolvents.

A polymerization activator may be used but is generally not needed. Examples of activators include water, methanol, ethanol, isopropyl alcohol, benzyl alcohol, phenol, ethyl mercaptan, 2-chloroethanol, 1.3-dichloropropanol, p-bormophenol, epichlorohydrin, ethylene oxide cyclopentene-2-hydroperoxide, cumyl hydroperoxide, tertiary butyl peroxide, benzoyl peroxide, and air or oxygen. Excellent activation is obtained by using air or a peroxide or hydroperoxide as the activator, especially by using the organic peroxides such as benzoyl peroxide.

The activator may be employed in a range from about 0 moles to about 3 moles per mole of organoaluminum compound, more preferably from slightly above about 0 to about 1 mole per mole. The activator may be added at any point in the charging procedure, but it is more preferably added last.

For polymerization in bulk, organoammonium molybdates and tungstates as defined by Minchak in U.S. Patent 4,426,502 are the desired catalysts. The co-catalysts used in bulk polymerization are preferably the alkylaluminum and alkylalkoxyaluminum co-catalyst described by Minchak in his patent referred to above. Portions of this patent pertaining to the alkylaluminum halide co-catalysts and alkylalkoxyaluminum halide co-catalyst are incorporated herein by reference as is the description of the organoammonium molybdates and tungstates therein.

For bulk polymerization, the catalyst is generally preblended with a portion of the monomer or is added with some solvent to aid dispersion in the monomer. Antioxidant is often added to prevent degradation and the monomer is preferably maintained under nitrogen. Bulk reactions typically proceed at temperatures in the range of about 50° C to about 150° C. Reaction injection molding (RIM) is a common form of bulk polymerization wherein the monomers are injected into a mold at a temperature sufficiently high for polymerization. Often the monomer is split into two feed streams, one containing catalyst, the other containing cocatalyst and both feed streams are mixed and then transferred to the mold. For polymerization in bulk, no solvent for monomer is employed but monomer is used to dissolve the catalyst and cocatalyst components as well as other additives that are desired to be in solution such as impact modifier and antioxidant. Also no molecular weight modifier is needed. It is important that the catalyst/monomer solution be kept separate from cocatalyst/monomer solution until the time for injecting or transferring the two

reactive solutions into the mold.

Ingredients may be added to either of the reactive components to slow the reaction as needed to allow for mold filling and glass mat impregnation, and the like, prior to the onset of polymerization. Good mixing of the reactive components is needed. The reactive components may be sensitive to oxygen and moisture and if so, those substances (moisture and air) should be excluded from the process. Fillers and reinforcing materials and flame retardants may be dissolved or dispersed in either or both of the reactive liquids but provisions must be made to keep them uniformly dispersed and those additives must be selected and treated so that they will not adversely affect the catalyst or co-catalyst activity.

For solution polymerization the monomers may be added at any point in the charging procedure. A preferred charging procedure is as follows. The monomers and solvent(s) are added first to the reactor vessel. These ingredients may be added separately or as a mixture. The alkylaluminum iodide compound, or mixture of trialkylaluminum compound and iodine source, is added next, usually as a solution in a cosolvent such as benzene or toluene described heretofore. The molybdenum or tungsten salt is added next as a solution in a mixture of cosolvent and ester solvent described heretofore, followed by the activator, if used.

Monomeric impurities such as water (in amounts larger than suitable for use as an activator) and the like should be removed prior to addition of the molybdenum or tungsten compound. The alkylaluminum iodide compound or mixture of trialkylaluminum compound and iodine source may be used to titrate the monomers or mixture of monomers and solvent(s) until a color change from pink to colorless or slightly yellow is noted. a catalytically effective amount of alkylaluminum compound and iodine source may then be added, followed by addition of the molybdenum or tungsten compound. The end point of the titration is typically difficult to pinpoint exactly. With minor impurities present, up to ten times the catalytically effective amount and more of the alkylaluminum iodide or mixture of trialkylaluminum compound and iodine source may be required to render the impurities harmless.

The mixing of catalyst components and the polymerization are preferably carried out in an inert atmosphere such as nitrogen and in the substantial absence of air or water. The polymerization may be performed as a batch or continuous operation and is conducted under sufficient pressure to keep the monomers and solvents in liquid state, the pressure required depending upon the reaction temperature. The particular solvent system selected must be liquid under the reaction conditions used. The reaction mixture in the reactor may be cooled or heated to polymerization temperature at the start of the additions or at any point during addition of the various reactants. Generally, polymerization temperatures from about 10 °C to about 100 °C can be used, although the reaction generally proceeds especially well at about 25 °C to 40 °C. The polymerization may be short-stopped by the addition of alcohols such as ethanol, amines such as diethylamine, alkanolamines such as ethanolamine, or carboxylic acids such as acetic acid.

At the conclusion of the polymerization, the copolymers may be isolated by any method known to the art such as by direct drying under reduced pressure, by coagulation and precipitation using an alcohol such as methanol, ethanol, isopropanol or the like, or by steam or hot water stripping. The polymer is recovered and may be washed further with water or an alcohol and then dried.

The copolymers of this invention are high molecular weight products typically having dilute solution viscosities (DSV) ranging from about 0.2 to about 4.0, more generally from about 0.4 to about 2.0. By dilute solution viscosity is meant a value obtained using the following formula:

$$DSV = \ln(t/t_0)/\underline{c}$$

wherein $t_0$ is toluene flow time and $\underline{t}$ is flow time of a polymer solution in toluene (both measured at 25 °C in toluene using an Ostwald-Fenske viscometer) and $\underline{c}$ is the concentration of the polymer solution (measured in grams of polymer per deciliter of toluene at 25 °C.) In this case $\underline{c}$ was 0.25 gram of polymer per deciliter of toluene. The DSV is regarded as a measure of molecular weight and is reported in units of deciliters/gram.

As indicated heretofore, the resinous cycloolefin monomers provide high glass transition temperature effects with the contribution generally being significantly greater than tetracyclododecene both on a mole and weight percent basis. The norbornene-type monomers maintain their processability in that small quantities of the resinous cycloolefin monomers are used to achieve high heat distortion temperatures. The monomeric components of resinous cycloolefin monomers and norbornene-type monomers produce copolymers having satisfactory glass transition temperatures (typically from about 100 °C to about 300 °C), and processability, and a balance of other properties sufficient to make these polymers attractive substitutes when properly compounded, for ABS, polycarbonates and polyphenyleneoxides, etc. When these monomers are polymerized in bulk, the products are suitable substitutes for rigid polyurethanes, polyureas,

polyamides, and polyepoxy materials.

The following examples illustrate particular embodiments of the invention. It is emphasized that not all embodiments of this invention are illustrated with the particularity given below.

## Examples 1-5

## Thermal Properties of Polymers Derived from Resinous Monomers

Examples 1-5 are provided to illustrate the effect resinous monomers have on the thermal properties of polymers produced therefrom. This effect is illustrated by the data in Table 3 below. The glass transition temperature (Tg) is substantially increased for these solution polymers as the resinous monomer content is increased, even where the other comonomer is tetracyclododecene, a monomer which provides homopolymers with high Tg values (about 210°C).

Copolymers of hexacycloheptadecene (HH) and methyltetracyclododecene (MTD) of varying composition were prepared for Examples 1-4 by the polymerization procedure below. For Example 5, homopolymers of hexacycloheptadecene were prepared by the same procedure.

## Solution Polymerization Procedure

Polymerization of seived monomers proceeded in cyclohexane using dry, capped, seven ounce bottles. The quality of monomer varied in each example with the total monomer varying from about 10-20 grams. The hexacycloheptadecene (HH) monomer was used at about 80% purity and the methyltetracyclododecene (MTD) monomer was used at about 98% purity. The quantity of cyclohexane was generally about 80 milliliters. The quantity of cyclohexane used for each example is reported in grams within Table 3. Polymerization took place in the presence of hexene-1, ethylaluminum sesquichloride co-catalyst and molybdenum pentachloride catalyst. The quantity of catalyst, co-catalyst and solvent used for each example is reported in grams within Table 3. The total solids content of the polymerization medium was about 15% by weight. The molar ratio of total monomer to catalyst was about 2000 and the molar ratio of catalyst to ethylaluminum sesquichloride co-catalyst was about 5.0. The ethylaluminum sesquichloride was used in a solution of toluene at about 25 weight percent and the molybdenum pentachloride was used in ethylacetate/toluene (25:75 weight percent) at about 1.6 weight percent.

The polymerization was allowed to proceed for about 30 minutes and the polymer was precipitated in isopropyl alcohol containing Ethyl 330 hindered phenol antioxidant. The polymer was dried in a vacuum oven. The cycloolefin monomers used in each of Examples 1-5 is illustrated below in Table 3.

## Experimental

Glass transition temperatures were determined for the polymers of Example 1-5, using a DuPont 990 or 1090 Thermal Analyzer equipped with a Differential Scanning Calorimetry (DSC) cell. Sample runs were conducted under a nitrogen purge with a heat rate of about 20°C per minute. Multiple heats were employed to determine that volatiles were removed and stresses relieved from the samples. Midpoints of the endotherm curves are reported.

TABLE 3

| Effect of Resinous Monomers on Thermal Properties of Solution Polymerized Product | | | | | |
|---|---|---|---|---|---|
| (Copolymers of methyltetrocyclododecene and hexacycloheptadecene) | | | | | |
| Example | 1 | 2 | 3 | 4 | 5 |
| Ingredient A (80% pure) hexacycloheptadecene, gm | 4.9 | 9.7 | 14.6 | 16.5 | 19.4 |
| Ingredient B (98% pure) methyltetracyclododecene, gm | 10.4 | 6.9 | 3.5 | 2.1 | -0- |
| weight ratio of A:B, wt% | 25/75 | 50/50 | 75/25 | 85/15 | 100/0 |
| hexene-1, gm | 11.9 | 12.9 | 13.7 | 14.1 | 14.6 |
| Ethylaluminum sesquichloride, 25% wt. in toluene, gm | 0.21 | 0.22 | 0.24 | 0.25 | 0.25 |
| Molybdenum pentachloride, 1.6 wt. % in ethyl acetate/toluene 25:75 wt. %, gm | 0.72 | 0.77 | 0.82 | 0.84 | 0.87 |
| Cyclohexane, gm | 62.6 | 60.2 | 57.8 | 56.8 | 55.4 |
| Glass transition temperature of product, °C | 210 | 225 | 228 | 244 | 247 |

The data in Table 3 shows the progressive increase in Tg values as the quantity of hexacycloheptadecene increases.

## Example 6 & 7

### Improvement in Thermal Properties of Bulk Polymerized Product

Examples 6 and 7 illustrate a method of producing resinous cycloolefin monomers within a mixture of cycloolefin monomers by heating dicyclopentadiene above about 140° C. Control A is also provided to show the Tg values for a polymer without resinous cycloolefin monomers. For Example 6 and Example 7, the resinous cycloolefin monomers were copolymerized with dicyclopentadiene in accordance with the bulk polymerization procedure give below. For Control A, dicyclopentadiene was homopolymerized in accordance with the bulk polymerization procedure given below. The glass transition temperatures obtained for the copolymers produced for Examples 6 and 7 and Control A are shown in Table 4 below.

The volume of other resinous cycloolefin monomers reported in Table 4 is an approximation made after the dicyclopentadiene cyclopentadiene trimers and cyclopentadiene tetramers were accounted for.

TABLE 4

| Effect of Resinous Monomers on Thermal Properties of Bulk Polymerized Products | | | | |
|---|---|---|---|---|
| | Composition of feedstock (wt %) | | | |
| | DCPD[a] | tri-CPD[b] tetra-CPD[c] | other resinous monomers | Tg °C |
| Control A | 99.8 | - | - | 160 |
| Example 6 | 80 | 17.9 | 2.1 | 178 |
| Example 7 | 72 | 22 | 6.0 | 182 |

(a) dicyclopentadiene
(b) cyclopentadiene trimer
(c) cyclopentadiene tetramer

## Examples 8 and 9

### Improvement in Thermal Properties for Copolymers of Cycloolefin Monomers

In Examples 8 and 9 and Control B, data is provided which shows how resinous monomer mixtures can be used to enhance glass transition values for copolymer products. Normally, when ethylidene norbornene is used as a co-monomer with dicyclopentadiene, the ethylidene norbornene causes lowering of the glass transition temperature of the product. Where there is a mixture of resinous polycycloolefins also within the feedstock, there is a dramatic increase in the glass transition of the copolymer product obtained upon bulk polymerization, as shown in Table 5. For Examples 8 and 9 and Control B, bulk polymerization was performed in accordance with the procedure outlined below.

TABLE 5

| Effect of Resinous Monomers on Thermal Properties of Bulk Co-Polymerized (RIM type or RTM type, or LIM type) Products | | | | | | |
|---|---|---|---|---|---|---|
| | Composition of Feedstock (wt %) | | | | | |
| | DCPD[a] | tri-CPD[c] | tetra-CPD[d] | ENB[b] | ETD[e] | Tg °C |
| Control B | 90 | - | - | 10 | - | 153 |
| Example 8 | 73 | 16 | 1.5 | 5.4 | 3.25 | 177 |
| Example | 64.3 | 22 | 3.1 | 4.6 | 4.8 | 191 |

(a) dicyclopentadiene
(b) ethlidene norbornene
(c) cyclopentadiene trimer
(d) cyclopentadiene tetramer
(e) ethylidene tetracyclododecene

## Bulk Polymerization

Samples prepared in Examples 6-9 and Controls A and B were each obtained by adding the following

ingredients sequentially to a clear dry quart bottle at room temperature: cycloolefin monomers, antioxidant, cocatalyst and catalyst. Variations in the order of addition may have occured, however, the trialkylammonium molybdate catalyst was always added last under a nitrogen blanket.

To provide the resinous cycloolefin monomers used in Examples 6 and 7, a volume of dicyclopentadiene was heated and these monomers were produced in-situ. To provide he resinous cycloolefin monomers used in Examples 8 and 9, a mixture of dicyclopentadiene and 5-ethylidene-2-norbornene was heated to generate the resinous cycloolefin monomers in-situ.

The components and quantities used in each example and control are described more particularly below and the cycloolefin monomer composition for each example and control is provided in Tables 4 and 5.

(1) Cycloolefin monomers 70-80 gms
(2) Hindered phenol antioxidant 1-3 gms
(3) Co-catalyst
(a) diethyl aluminum chloride
0.5M dicyclopentadiene solution 3-5 mls
(b) Silicon tetrachloride
0.5M dicyclopentadiene solution 1-3 mls
(c) alcohol (n-propanol)
0.5 dicyclopentadiene solution 1-3 mls

(4) Catalyst-trialkylammonium molylodate, or similar 4-6 mls
$[C_{12}H_{25})_3\ NH]_4\ Mo_8\ O_{26}$
0.125 M dicyclopentadiene solution

Upon completion of the addition to the quart bottle, the mixture obtained was shaken and then injected by nitrogen pressure into a 1/8" x 8" x 8" cavity mold held at 55° C. After about 1-2 minutes, the exothermic reaction began and the temperature rose to about 150° C. The plaque formed was demolded after about 2-3 minutes and measurements were made of the degree of conversion and glass transition temperature. Glass transition temperature values are given in Tables 4 and 5. The degree of conversion generally fell in the range of about 97-99%.

It is possible to impact modify these compositions by the addition of an impact modifier, the most commonly used being the Kraton rubbers, butadiene polymers, polyisoprene rubbers, ethylene-propylene-diene modified rubbers and the like. Other modifiers and fillers may be added such as carbon black, titanium dioxide and other pigments, glass fiber and other reinforcers, and such materials that will not adversely affect the activity of the catalyst and/or cocatalyst and provide desired properties. Flame retardants such as antimony oxide combinations with halogen containing organic materials, including deca- and octabromodiphenyl ethers, are useful.

Bulk polymerized products such as those indicated in Tables 4 and 5 show improved glass transition temperature properties with the use of these high molecular weight resins. These bulk polymerized polymers will find many uses in structural applications such as fenders for automobiles or housings for business machines and computers. Products made by solution polymerization will find uses in applications filled by engineering thermoplastics and those requiring low moisture sensitive products and low dielectric constants. The polymers obtained can be described as vinylene-4,5-polycycloalkyl-1,3-cyclopentane copolymers.

While the invention has been disclosed in this patent application by reference to the details of preferred embodiments of the invention, it is to be understood that this disclosure is intended in an illustrative rather than in a limiting sense, as it is contemplated that modifications will readily occur to those skilled in the art, within the spirit of the invention and the scope of the appended claims.

## Claims

1. A composition comprised of a ring-opened polymerized polymer derived from cycloolefin monomers of which at least about 5 weight percent, based on the total weight of cycloolefin monomers, are one or more resinous cycloolefin monomers conforming to a formula selected from the group consisting of formulas I and II below:

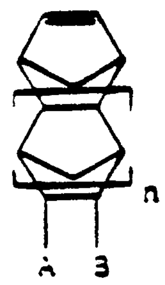

I

and

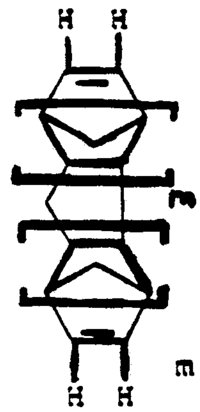

II

wherein:

(a) n of Formula I is a whole number of from 1 to 10 having a average value greater than 1 for all the resinous cycloolefin monomers of Formula I in said ring-opened polymerized polymer;

(b) both m and $m'$ of Formula II are independently whole numbers of from 1 to 9 wherein the sum of $m+m'$ is less than 10 for each resinous cycloolefin monomer and the average value of $m+m'$ for all the resinous cycloolefin monomers of Formula II in said ring-opening polymerized polymer is greater than 2; and

(c) where n is 2 or more, A and B of Formula I are

(i) independently selected from hydrogen, halogen, alkyl groups of from 1 to 12 carbon atoms, alkylene groups of from 2 to 12 carbon atoms, substituted and unsubstituted aryl groups of from 6 to 20 carbon atoms, saturated and unsaturated cycloalkyl and substituted cycloalkyl groups of from 6 to 20 carbon atoms or

(ii) combined together to form cyclic groups of 4 to 12 carbon atoms with the two ring carbon atoms connected thereto and are selected from unsaturated cyclic structures, saturated cyclic structures and combinations of both, and

(d) where n is equal to 1, A and B are combined together to form cyclic groups of 4 to 12 carbon atoms with the two ring carbon atoms connected thereto and are selected from unsaturated cyclic structures, cyclic structures and combinations of both.

2. A composition as in claim 1 wherein the average value of n for all the resinous cycloolefin monomers of Formula I within the ring-opened polymerized polymer falls in the range of above about 1 to about 2.

3. A composition as in claim 1 wherein the one or more resinous cycloolefin monomers are copolymerized with a cycloolefin monomer which conforms to a formula selected from the group consisting of

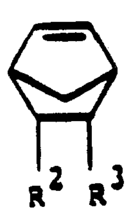

VI

and

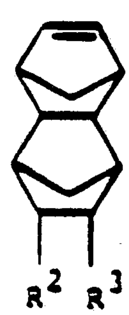

VII

wherein $R^2$ and $R^3$ are (a) independently selected from hydrogen, halogen, $C_1$-$C_{12}$ alkyl groups, $C_2$-$C_{12}$ alkylene groups, $C_6$-$C_{20}$ cycloalkyl groups and $C_6$-$C_{20}$ aryl groups or (b) together form cyclic groups of from 4 to 12 carbon atoms with the two ring carbon atoms connected thereto selected from saturated cyclic structures, unsaturated cyclic structures and combinations of both.

4. A composition as in claim 3 wherein the one or more resinous cycloolefin monomers which conform to Formula I also conform to a formula selected from the group consisting of

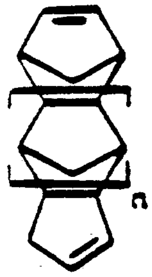 III 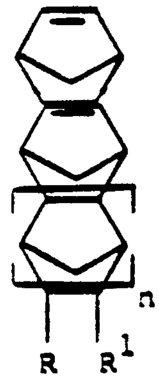 IV and 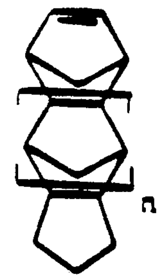 V

wherein n is a whole number of from 1 to 10 and has an average value greater than 1 and below about 6 for all resinous cycloolefin monomers of Formulas III, IV and V, and R and $R^1$ are independently selected from hydrogen $C_1$-$C_4$ alkyl groups and $C_2$-$C_4$ alkylene groups.

5. A composition as in claim 4 wherein the cycloolefin monomer copolymerized with the one or more resinous cycloolefin monomers is selected from the group consisting of tetracyclododecene, 2-norbornene, dicyclopentadiene, tricyclopentadiene 5-methyl-2-norbornene, 5-ethyl-2-norbornene, methyl-tetracyclododecene and ethyl-tetracyclododecene.

6. A composition as in claim 4 wherein the one or more resinous cycloolefin monomers are additionally copolymerized with a non-conjugated acyclic olefin monomer.

7. A composition as in claim 4 which further comprises components selected from the group consisting of impact modifiers, flame retardants, UV stabilizers, pigments and fillers.

8. A composition as in claim 4 wherein said ring-opened polymerized polymer is a copolymer derived from monomers comprised of cycloolefin monomers of which about 15 to 30 weight percent are one or more resinous cycloolefin monomers of Formulas III, IV and V and from about 50 to 85 weight percent are one or more cycloolefin monomers of Formulas VI and VII, wherein said weight percent is based on the total weight of said cycloolefin monomers.

9. A composition as in claim 8 which additionally comprises from 1 to 10 percent by weight impact modifier.

10. A composition as in claim 9 wherein said impact modifier is selected from polybutadiene, polyisoprenes, polyethylene, styrene-butadiene-styrene block copolymers, and ethylene-propylene-diene modified copolymers.

11. A composition as in claim 8 which additionally comprises 5-20% by weight flame retardant.

12. A composition as in claim 11 wherein said flame retardant is comprised of antimony oxide and an organic halogen containing compound.

13. A composition as in claim 12 wherein said organic halogen containing compound is selected from decabromodiphenyl ether and octabromodiphenyl ether.

14. A composition as in claim 1 wherein said ring-opened polymerized polymer is produced by a bulk polymerization process, in the substantial absence of solvent.

15. A composition as in claim 14 wherein said ring-opened polymerized polymer is formed within a mold.

16. A composition as in claim 1 wherein said ring-opened polymerized polymer is produced by a solution polymerization process, in the presence of solvent.

17. A composition substantially comprised of a ring-opened polymerized polymer derived from monomers comprised of

(a) 40 to 95 % by weight of a cycloolefin selected from the group consisting of dicyclopentadiene, ethylidenenorbornene and ethylidene-tetracyclododecene methyl-norbornene, methyl-tetracyclododecene, norbornene and tetracyclododecene;

(b) 5 to 25% by weight cyclopentadiene trimer;

(c) 0.5 to 10% by weight and cyclopentadiene tetramer;

(d) 0 to 1% by weight cyclopentadiene pentamer.

18. A composition substantially comprised of a ring-opened polymerized polymer derived from about 5% to about 100% by weight hexacycloheptadecene monomers.

19. A composition as in claim 17 wherein cyclopentadiene trimer, cyclopentadiene tetramer and cyclopentadiene pentamer are obtained by Diels-Alder reaction of cyclopentadiene with dicyclopentadiene.